# EUROPEAN PATENT SPECIFICATION

(11) **EP 3 599 885 B1**
(45) Date of publication and mention of the grant of the patent: **26.02.2025**
(21) Application number: 18708437.1
(22) Date of filing: 08.03.2018
(51) Int. Cl.: A23J 3/22, A23L 29/225, A23L 29/269, A23K 10/30

(54) **MEAT ANALOGUE COMPRISING AQUEOUS GELLING COMPOSITION**
FLEISCHANALOG MIT WÄSSRIGER GELIERUNGSZUSAMMENSETZUNG
ANALOGUE DE VIANDE COMPRENANT UNE COMPOSITION DE GÉLIFICATION AQUEUSE

(30) Priority: 30.03.2017 EP 17163771
(43) Date of publication of application: 05.02.2020
(73) Proprietor: Unilever IP Holdings B.V., 3013 AL Rotterdam (NL)
(72) Inventor: MELLEMA, Michel, 3133 AT Vlaardingen (NL); HAMER, Robert, Jan, 3133 AT Vlaardingen (NL)
(74) Representative: Tjon, Hon Kong Guno
(86) International application number: PCT/EP2018/055795
(87) International publication number: WO 2018/177717

(56) References cited:
- WO-A1-91/19423
- JP-A- 2010 200 627
- US-A- 4 556 570
- US-A- 5 294 456
- US-A1- 2012 251 686
- US-A1- 2014 154 390
- US-A1- 2014 272 094
- MASAKUNI TAKO ET AL: "Co-gelation mechanism of xanthan and galactomannan", COLLOID & POLYMER SCIENCE, vol. 288, no. 10-11, 5 June 2010 (2010-06-05), DE, pages 1161 - 1166, XP055600363, ISSN: 0303-402X, DOI: 10.1007/s00396-010-2242-6
- RINAUDO M ET AL: "Rheological behavior of binary and ternary mixtures of polysaccharides in aqueous medium", FOOD HYDROCOLLOIDS, ELSEVIER BV, NL, vol. 23, no. 7, 1 October 2009 (2009-10-01), pages 1720 - 1728, XP026145865, ISSN: 0268-005X, [retrieved on 20090207], DOI: 10.1016/J.FOODHYD.2009.01.012
- DATABASE EMBASE [online] ELSEVIER SCIENCE PUBLISHERS, AMSTERDAM, NL; July 2010 (2010-07-01), TAKO M ET AL: "Co-gelation mechanism of xanthan and galactomannan", Database accession no. EMB-2010491159
- TAKO M ET AL: "Co-gelation mechanism of xanthan and galactomannan", COLLOID AND POLYMER SCIENCE 2010 SPRINGER VERLAG DEU, vol. 288, no. 10-11, July 2010 (2010-07-01), pages 1161 - 1166, XP055600363, ISSN: 0303-402X, DOI: 10.1007/s00396-010-2242-6
- DATABASE GNPD [online] September 2016 (2016-09-01), ANONYMOUS: "Vegetarian Mini Burgers with Bell Pepper", XP002772257, retrieved from MINTEL Database accession no. 4260049
- ANONYMOUS: "JP2010200627", 16 September 2010 (2010-09-16), pages 1 - 13, Retrieved from the Internet <URL:https://www4.j-platpat.inpit.go.jp/eng/tokujitsu/tkbs_en/TKBS_EN_GM404_Detailed.action> [retrieved on 20170720]
- ZEYNEP OZBEN DEMIRCI ET AL: "Effects of xanthan, guar, carrageenan and locust bean gum addition on physical, chemical and sensory properties of meatballs", JOURNAL OF FOOD SCIENCE AND TECHNOLOGY, vol. 51, no. 5, 18 November 2011 (2011-11-18), India, pages 936 - 942, XP055382730, ISSN: 0022-1155, DOI: 10.1007/s13197-011-0588-5
- PAULO B. FERNANDES: "Influence of galactomannan on the structure and thermal behaviour of xanthan/galactomannan mixtures", JOURNAL OF FOOD ENGINEERING, vol. 24, no. 2, 1 January 1995 (1995-01-01), GB, pages 269 - 283, XP055392673, ISSN: 0260-8774, DOI: 10.1016/0260-8774(94)P2647-N
- COPETTI G ET AL: "Synergistic gelation of xanthan gum with locust bean gum: a rheological investigation", GLYCOCONJUGATE JOURNAL, CHAPMAN & HALL, BOSTON, vol. 14, 1 January 1997 (1997-01-01), pages 951 - 961, XP003015689, ISSN: 0282-0080, DOI: 10.1023/A:1018523029030

## Description

### Field of the invention

The present invention relates to a method of preparing a meat analogue comprising proteinaceous fibres and an aqueous gelling composition comprising xanthan gum and galactomannan. The invention further relates to a meat analogue comprising an aqueous gelling composition and to the use of an aqueous gelling composition comprising xanthan gum and galactomannan for enhancing the juiciness of meat analogues.

### Background of the invention

Meat is considered the highest quality protein source, not only due to its nutritional characteristics, but also for its appreciated taste. Meat is nutritious, because meat protein contains all essential amino acids for humans. In addition, meat comprises essential vitamins, such as vitamin B12, and is rich in minerals. Meat proteins also greatly contribute to food characteristics by imparting specific functionalities, such as, appearance, texture, and mouthfeel.

However, from a health point of view, an excessive intake of meat products cannot be recommended, because meat contains cholesterol and a higher proportion of saturated fatty acids than polyunsaturated fatty acids (PUFAs).

Further, due to animal diseases, such as mad cow disease, global shortage of animal protein, a growing consumer demand for religious (halal or kosher) food and for economic reasons, there is an increased interest in the consumption of non-meat proteins by consuming meat analogues instead of actual meat products.

Examples of non-meat proteins are found in a widespread variety of sources, such as legumes, oilseeds, cereals, algae protein, dairy protein, egg protein and fungal protein.

Meat analogues are prepared such that they resemble meat as much as possible in appearance, taste and texture, when hydrated. Meat analogues are typically prepared from proteinaceous fibres of non-meat origin. Proteinaceous fibres, or texturized vegetable protein, are characterized by having an identifiable structure and a structural integrity, such that each unit will withstand hydration, cooking and other procedures used in preparing the fibres for consumption (Asgar *et al.,* 2010).

One of the major challenges in the field of meat analogues production, is that if the firmness of a meat analogue is increased to mimic the texture of meat, this generally leads to a decrease in the perceived juiciness of the meat analogue. A lot of consumers therefore associate meat analogues with being too dry and consider meat analogues to be less tasty than real meat.

Juiciness is defined as the in-mouth perception of liquid during mastication (i.e. chewing) prior to swallowing. Said liquid encompasses water, oil, juices and saliva. Juiciness of cooked meat analogues is influenced by product characteristics such as the moisture content, pH, water-holding capacity of the meat analogue, firmness of the raw product and the residual fluid (moisture and/or fat) remaining in the final cooked product, which is dependent upon the cooking methods applied.

In the prior art methods of preparation of meat analogues are described wherein attempts are made to improve the texture of meat analogues.

WO 2012/158023 describes an extrusion process for turning vegetable protein compositions such as soy protein into a fibrous, meat-like structure. The process involves the application of relatively high moisture contents. An open structure is produced that can be infused with water so as to influence the product's tenderness. Tenderness is a texture attribute which indicates how easily the texture is chewed or cut.

US 2007/0269571 describes a composition for preparing a soybean protein-processed food, which comprises 5-10% of soybean protein, 5-8% of gelling agent, 0.1-0.3% of coagulating agent and 70-90% of water on the basis of the total weight of the composition. In the examples glucomannan in combination with calcium hydroxide is applied as gelling agent and coagulating agent respectively. This leads to a gel that is gelled irreversible.

US 2014/272094 describes a method of preparing a piece of textured vegetable protein having pores therein, comprising the steps of:
- preparing a marinade solution having at least one substance that gelatinizes upon heating;
- marinating a piece of texturized vegetable protein in the marinade solution such that the marinating solution hydrates the textured vegetable protein and the at least one substance infiltrates at least some of the pores of the textured vegetable protein; and
- cooking the marinated piece of texturized vegetable protein,
- thereby gelatinizing the at least one substance,
wherein the composition of the marinade solution is such that said method provides the piece of textured vegetable protein with a texture and flavor similar to the texture and flavor of a piece of cooked meat or seafood.

A drawback of irreversible gelling compositions, meaning such compositions which lead to gel irreversibly, in meat analogues is that even though the water-holding capacity of the meat analogues is increased, the juiciness remains unsatisfactory.

JP 2010/200627 describes the preparation of simulated meat food, which involves extruding granular vegetable protein using extruder, hydrating dried granular vegetable protein, disentangling the hydrated vegetable protein to obtain vegetable protein in fibrous form, and heating the fibrous vegetable protein with binder to obtain mixture with coagulated protein. In the examples the combining of vegetable protein in fibrous form with a gelling composition comprising carrageenan and glucomannan is described.

A drawback of a gelling composition comprising carrageenan is that essential gel properties, such as the gelling temperature and the melting temperature, are strongly influenced by salts present in the aqueous phase. This severely limits the practical applicability of carrageenan based gels. In addition, known meat alternatives lack a glossy appearance.

### Summary of the invention

The inventors have found a way to produce a meat analogue that behaves, at least in part, like real meat during cooking and that, when cooked, has a very pleasant succulent texture and glossy appearance. More particularly, the inventors have found that such a meat analogue can be prepared by combining proteinaceous fibres of non-meat origin with an aqueous gelling composition that contains xanthan gum and galactomannan.

Thus, the present invention relates to a method of preparing a meat analogue, comprising the steps of:
a. providing proteinaceous fibres comprising, by weight of the proteinaceous fibres, 40-80 wt.% of water and 5-50 wt.% protein selected from dairy protein, egg protein, plant protein, fungal protein and combinations thereof;
b. providing an aqueous gelling composition, comprising by weight of the gelling composition:
   i. 0.05-2 wt.% xanthan gum;
   ii. 0.05-2 wt.% galactomannan;
   iii. at least 80 wt.% water;
c. combining 100 parts by weight of the proteinaceous fibres with 2-50 parts by weight of the aqueous gelling composition.

The meat analogues according to the invention have a glossy, juicy appearance like real meat, and, like real meat, these meat analogues produce a 'sizzling' sound during shallow frying. The cooked meat analogue not only has a juicy appearance, but it actually releases juice during cutting and chewing.

The combining of the proteinaceous fibres with the aqueous gelling composition in accordance with the present invention results in the formation of interstitial gel deposits between the proteinaceous fibres. These interstitial gel deposits release liquid during cooking and when pressure is applied during e.g. cutting or chewing.

The combination of xanthan gum and galactomannan as employed in the aqueous gelling composition offers the advantage that it retains water as long as the meat analogue is kept at ambient or lower temperatures and as long as it is not subjected to strong forces, like cutting. However, when this gelling composition is heated, the gel matrix formed by xanthan gum and galactomannan will disappear ('melt') and liquid will be released from the meat analogue. Liquid will also be released by the gelling composition when the meat analogue is subjected to shear. Thus, the interstitial gel deposits not only impart a glossy, juicy appearance to the meat analogue, they also cause the meat analogue to release liquid during cooking, preparation and consumption in a way that is very similar to the way juice is released from real meat during these actions.

The aqueous gelling composition employed in accordance with the present invention offers the additional advantage that its advantageous properties are not strongly affected by the presence of inorganic salts or acidulants.

The invention further relates to an uncooked meat analogue comprising, by weight of the meat analogue, the following separate components:
- at least 50 wt.% of proteinaceous fibres comprising, by weight of the proteinaceous fibres, 40-80 wt.% of water and 5-50 wt.% protein selected from dairy protein, egg protein, plant protein, fungal protein and combinations thereof;
- 0-40 wt.% of edible particulate ingredients;
- 2-20 wt.% of interstitial aqueous gelling composition;
wherein the interstitial aqueous gelling composition comprises by weight of the gelling composition:
i. 0.05-2 wt.% xanthan gum;
ii. 0.05-2 wt.% galactomannan;
iii. at least 80 wt.% water.

The invention also relates to the use of an aqueous gelling composition for enhancing juiciness in meat analogues, wherein the aqueous gelling composition comprises by weight of the gelling composition:
i. 0.05-2 wt.% xanthan gum;
ii. 0.05-2 wt.% galactomannan;
iii. at least 80 wt.% water.

### Detailed description of the invention

A first aspect of the invention relates to a method of preparing a meat analogue, comprising the steps of:
a. providing proteinaceous fibres comprising, by weight of the proteinaceous fibres, 40-80 wt.% of water and 5-50 wt.% protein selected from dairy protein, egg protein, plant protein, fungal protein and combinations thereof;
b. providing an aqueous gelling composition, comprising by weight of the gelling composition:
   i. 0.05-2 wt.% xanthan gum;
   ii. 0.05-2 wt.% galactomannan;
   iii. at least 80 wt.% water;
c. combining 100 parts by weight of the proteinaceous fibres with 2-50 parts by weight of the aqueous gelling composition.

The term "meat analogue" as used herein refers to hydrated proteinaceous food products that comprise non-meat protein as protein source, and are similar, at least in part, to real meat in appearance, colour, flavour and texture.

The term "uncooked meat analogue" as used herein refers to a meat analogue, which upon instruction to the consumer, may receive a heat treatment before consumption.

The term "xanthan gum" as used herein refers to a polysaccharide secreted by *Xanthomonas* sp. This polysaccharide is believed to have a main chain consisting of a linear backbone of 1,4-linked β-D-glucose and side chains of two mannose and one glucuronic acid (Garcia-Ochoa et al., Xanthan gum: production, recovery, and properties, Biotechnology Advances, Vol. 18, p.549-579.).

The term "galactomannan" as used herein refers to a high-molecular-weight polysaccharide that is composed of galactose and mannose units combined through glycosidic linkages. Examples of galactomannans are fenugreek gum, guar gum, tara gum and locust bean gum.

The term "locust bean gum" as used herein refers to a gum extracted from the seeds of the carob tree. Locust bean gum consists mainly of high-molecular-weight galactomannan polysaccharide that is composed of galactose and mannose units combined through glycosidic linkages. Locust bean gum typically contains mannose and galactose in a ratio of approximately 4:1.

The term "gelling composition" as used herein refers to a composition that is capable of forming a gel at ambient temperature and ambient pressure.

The term "gel" as used herein refers to a solid or semi-solid aqueous composition that is largely composed of an aqueous liquid that is rendered non-liquid by the presence of a three-dimensional network structure within said liquid. A gel typically has a ratio of elastic modulus G' to viscous modulus G" of at least 1, preferably at least 3, more preferably at least 5.

G' and G" are measured under the following circumstances: the composition is kept for at least 12 hours at 20 °C. G' and G" are measured at 20 °C, using an oscillatory frequency of 1 rad/s and at a strain of 1% (tested to be within the linear viscoelastic regime). This set of parameters refers to a standard oscillatory test, also known as a dynamic mechanical analysis, conducted with a standard state of the art low deformation rheometer as commercially available from e.g. Bohlin, Anton Paar or TA Instruments. See also chapter 8.5 of 'The Rheology Handbook' by T.G. Mezger (2006).

The term "reversible gel" as used herein refers to a gel that becomes liquid when heated to a temperature above its gel melting temperature and that becomes a gel again when cooled down to below its gelling temperature.

The term "gel-melting temperature" as used herein refers to the temperature at which a gel becomes a liquid. More specifically, the gel-melting temperature is defined as the temperature at which the value for the loss modulus (G") becomes bigger than the value for the storage modulus (G'), while heating up the gel sample. This temperature can be measured according to the method described above, with the addition that the temperature of the sample is increased from 20 °C to 90 °C, with a rate of 1 °C/min, while oscillating with a frequency of 1 rad/s and at a strain of 1%.

The term "gelling temperature" as used herein refers to the temperature at which a liquid becomes a gel. More specifically, the gelling temperature is defined as the temperature at which the value for the storage modulus (G') becomes bigger than the value for the loss modulus (G"), while cooling the sample down. This temperature can be measured according to the method described above, with the addition that the temperature of the sample is decreased from 90 °C to 20 °C, with a rate of 1 °C/min, while oscillating with a frequency of 1 rad/s and at a strain of 1%.

The term "fat" as used herein refers to glycerides selected from triglycerides, diglycerides, monoglycerides, phosphoglycerides and combinations thereof. The term "fat" encompasses fats that are liquid at ambient temperature as well as fats that are solid or semi-solid at ambient temperature.

The solid fat content at 20 °C (N₂₀) can suitably be determined using ISO 8292-1 (2012).

### Proteinaceous fibres

The proteinaceous fibres preferably comprise, by weight of the proteinaceous fibres, 7-30 wt.% protein selected from dairy protein, egg protein, plant protein, fungal protein and combinations thereof. More preferably the proteinaceous fibres comprise, by weight of the proteinaceous fibres, 10-26 wt.% of said protein and most preferably the proteinaceous fibres comprise, by weight of the proteinaceous fibres, 12-22 wt.% of said protein.

Examples of dairy protein are casein, whey protein and combinations thereof.

Examples of egg protein are proteins that are present in a chicken egg, such as egg yolk protein of egg white protein. Preferably the egg protein is egg white protein.

Examples of plant proteins are soy protein, cereal protein, rapeseed protein, cottonseed protein, sunflower protein, sesame protein, legume protein, lupin protein, potato protein and algae protein. Preferred plant proteins are soy protein, wheat protein, oat protein, bran protein and combinations thereof. More preferred plant proteins are soy protein, wheat protein and combinations thereof.

Examples of fungal protein are mushroom proteins or the proteins obtained from the fungi *Fusarium.* Preferably, the fungal protein is obtained from the fungi *Fusarium,* more preferably the fungal protein is obtained from the fungal species *Fusarium venenatum.* These *Fusarium venenatum* proteins are typically applied in Quorn^{®} products.

In a preferred embodiment, the protein in the proteinaceous fibres is selected from dairy protein, plant protein, fungal protein and combinations thereof. More preferably, the protein in the proteinaceous fibres is selected from plant protein, fungal protein and combinations thereof. Most preferably, the protein in the proteinaceous fibres is plant protein.

In another preferred embodiment, the protein in the proteinaceous fibrous is preferably a combination of egg protein and plant protein.

The proteinaceous fibres preferably comprise, by weight of the proteinaceous fibres, 50-76 wt.% of water, more preferably comprise, by weight of the proteinaceous fibres, 55-73 wt.% of water and most preferably comprise, by weight of the proteinaceous fibres, 60-70 wt.% of water.

The combination of protein and water preferably constitutes at least 80 wt.% of the proteinaceous fibres. More preferably, the combination of protein and water constitutes at least 85 wt.%, most preferably at least 90 wt.% of the proteinaceous fibres.

In a preferred embodiment, the proteinaceous fibres of the invention are prepared by extrusion or other shearing technologies for creating proteinaceous fibres. More preferably the proteinaceous fibres are prepared by extrusion, most preferably high moisture extrusion.

In another preferred embodiment, the proteinaceous fibres are prepared by a process comprising the steps of:
- providing an aqueous composition comprising protein selected from dairy protein, egg protein, plant protein, fungal protein and combinations thereof; and
- cross-linking the protein in the aqueous composition to produce a proteinaceous gel.

In yet another preferred embodiment, the proteinaceous fibres are prepared by a process comprising the steps of:
- providing an aqueous composition comprising protein selected from dairy protein, egg protein, plant protein, fungal protein and combinations thereof, said aqueous composition further comprising a gelling agent; and
- gelling the aqueous composition by cooling the aqueous composition or by adding a gelation inducing agent.

In yet another preferred embodiment, the proteinaceous fibres are prepared by a process comprising the steps of:
- providing an aqueous composition comprising protein selected from whey protein, egg protein, soy protein, wheat protein, oat protein, pea protein, chickpea protein, lupin protein, potato protein and combinations thereof; and
- gelling the aqueous composition by heating the aqueous composition.

The protein in the aqueous composition in this embodiment is more preferably selected from whey protein, soy protein, wheat protein, oat protein, pea protein, chickpea protein, lupin protein, potato protein and combinations thereof. Most preferably the protein in the aqueous composition in this embodiment is selected from soy protein, wheat protein, oat protein, pea protein, chickpea protein and combinations thereof.

The proteinaceous fibres according to the invention preferably have a mean length to diameter ratio of at least 10:1. The length to diameter ratio is also known as the 'aspect ratio'. The mean length to diameter ratio is more preferably at least 25:1 and most preferably in the range of 50:1 to 200:1.

In a preferred embodiment, 100 parts by weight of the proteinaceous fibres are mixed before or during step c) of the method according to the invention, with 1-80 parts by weight of edible particulate ingredients. More preferably, 100 parts by weight of the proteinaceous fibres are mixed before or during step c), with 5-70 parts by weight, most preferably 10-60 parts by weight, of edible particulate ingredients.

The edible particulate ingredients are preferably selected from herbs, spices, vegetables, fruit, nuts, pulses and combinations thereof.

Preferably, starch components, selected from starch, flour, maltodextrin and combinations thereof, are combined in an amount of less than 10 parts by weight, with 100 parts by weight of the proteinaceous fibres. More preferably, said starch components are combined in an amount of less than 5 parts by weight with 100 parts by weight of the proteinaceous fibres.

### Aqueous gelling composition

The combination of xanthan gum and galactomannan in the aqueous gelling composition preferably constitutes 0.1-1 wt.%, more preferably 0.15-0.8 wt.%, most preferably 0.2-0.6 wt.%, by weight of the aqueous gelling composition.

The weight ratio of xanthan gum to galactomannan is preferably between 5:95 and 95:5. More preferably, the weight ratio of xanthan gum to galactomannan is between 10:90 and 90:10, even more preferably between 20:80 and 80:20 and most preferably between 30:70 and 70:30.

The aqueous gelling composition preferably comprises 0.05-1 wt.%, more preferably 0.1-0.5 wt.%, most preferably 0.15-0.3 wt.%, of xanthan gum, by weight of the aqueous gelling composition.

The aqueous gelling composition preferably comprises 0.05-1 wt.%, more preferably 0.1-0.5 wt.%, most preferably 0.15-0.3 wt.% of galactomannan, by weight of the aqueous gelling composition.

The galactomannan is preferably selected from guar gum, locust bean gum and combinations thereof. More preferably, the galactomannan is locust bean gum.

The aqueous gelling composition preferably comprises 82-98 wt.%, more preferably 85-96 wt.%, most preferably 88-94 wt.% of water, by weight of the aqueous gelling composition.

The aqueous gelling composition preferably comprises 0.4-10 wt.% of inorganic salt, by weight of the aqueous gelling composition. More preferably, the aqueous gelling composition comprises 0.5-5 wt.%, most preferably 0.75-2.5 wt.% of inorganic salt, by weight of the aqueous gelling composition.

The inorganic salt is preferably selected from sodium chloride, potassium chloride and combinations thereof. More preferably the inorganic salt is sodium chloride.

The aqueous gelling composition preferably comprises 0.2-5 wt.% of flavouring ingredients selected from glutamic acid, food-grade acidulant, combinations and salts thereof, by weight of the aqueous gelling composition. More preferably, the aqueous gelling composition comprises 0.4-3.5 wt.%, most preferably 0.6-2.5 wt.% of said flavouring ingredients, by weight of the aqueous gelling composition.

Suitable sources of glutamic acid and salts thereof are yeast extracts, hydrolysed vegetable proteins and natural sources of glutamic acid, such as tomatoes.

Examples of food-grade acidulants are citric acid, lactic acid, tartaric acid, malic acid and hydrochloric acid. Preferred food-grade acidulants are citric acid, lactic acid and combinations thereof.

The aqueous gelling composition preferably comprises 0.2-5 wt.% of fat, by weight of the aqueous gelling composition. More preferably, the aqueous gelling composition comprises 0.35-3.5 wt.%, most preferably 0.5-2.5 wt.% of fat, by weight of the aqueous gelling composition.

The gel-melting temperature of the aqueous gelling composition preferably lies within the range of 30-97 °C. More preferably, the gel-melting temperature of the aqueous gelling composition lies within the range of 35-90 °C, most preferably in the range of 40-80 °C.

### Step c)

Preferably, 100 parts by weight of the proteinaceous fibres are combined with 4-25 parts by weight of the aqueous gelling composition, more preferably are combined with 5-20 parts by weight of the aqueous gelling composition and most preferably are combined with 7-15 parts by weight of the aqueous gelling composition.

Preferably, the combining of the proteinaceous fibres with the aqueous gelling composition in step c) is performed by:
- injecting the aqueous gelling composition into a mass of proteinaceous fibres;
- infusing a mass of proteinaceous fibres with the aqueous gelling composition;
- blending the proteinaceous fibres with the aqueous gelling composition; and
combinations thereof.

In one preferred embodiment, the combining of the proteinaceous fibres and the aqueous gelling composition in step c) is performed by injecting the aqueous gelling composition into a mass of proteinaceous fibres.

Preferably, the injecting is performed by injecting the aqueous gelling composition in discrete volumes in the range of 50-500 µl into the mass of proteinaceous fibres. More preferably in discrete volumes in the range of 100-400 µl and most preferably in discrete volumes in the range of 200-300 µl.

Preferably, the aqueous gelling composition is in liquid form to facilitate injection thereof. The liquid form of the aqueous gelling composition is either obtained by injecting the aqueous gelling composition before it solidifies or by heating the aqueous gelling composition to a temperature of at least 60 °C before it is injected.

In another preferred embodiment, the combining of the proteinaceous fibres and the aqueous gelling composition in step c) is performed by infusing a mass of proteinaceous fibres with the aqueous gelling composition.

In accordance with this embodiment, the aqueous gelling composition is in liquid form to enable the composition to penetrate the mass of proteinaceous fibres. The liquid form of the aqueous gelling composition is either obtained by infusing the aqueous gelling composition before it solidifies or by heating the aqueous gelling composition to a temperature of at least 60 °C before or during the infusion.

In yet another preferred embodiment, the combining of the proteinaceous fibres and the aqueous gelling composition in step c) is performed by blending the proteinaceous fibres with the aqueous gelling composition.

Preferably, the temperature of the aqueous gelling composition is below the gel-melting temperature during the blending of the proteinaceous fibres with the aqueous gelling composition. The temperature of the aqueous gelling composition during the blending lies preferably between -30 °C and 30 °C. More preferably, the temperature of the aqueous gelling composition during the blending lies between -25 °C and 25 °C, most preferably between -20 °C and 20 °C.

In a preferred embodiment the proteinaceous fibres are blended with the aqueous gelling composition in the form of discrete shapes. The volume of these discrete shapes of aqueous gelling composition during the blending preferably lies in the range of 50-5000 µl, more preferably in the range of 100-3000 µl and most preferably in the range of 200-1000 µl.

### Meat analogue prepared with the method according to the invention

The meat analogue according to the invention preferably comprises 5-50 wt.% of protein by weight of the meat analogue. More preferably the meat analogue comprises 10-40 wt.%, most preferably 12-30 wt.% of protein by weight of the meat analogue.

The meat analogue preferably comprises 20-70 wt.% of water by weight of the meat analogue. More preferably the meat analogue comprises 30-65 wt.%, most preferably 35-60 wt.% of water by weight of the meat analogue.

The meat analogue preferably contains water and protein in a weight ratio of at least 1.5:1. More preferably the weight ratio of the water and protein in the meat analogue is in the range of 1.75:1 and 7:1, most preferably in the range of 2:1 and 5:1.

The meat analogue preferably comprises 1-20 wt.% of fat, by weight of the meat analogue. More preferably the meat analogue comprises 2-15 wt.%, most preferably 5-12 wt.% of fat, by weight of the meat analogue.

The meat analogue preferably comprises less than 10 wt.% of meat protein, by weight of the meat analogue. More preferably the meat analogue comprises less than 5 wt.% of meat protein, by weight of the meat analogue. Most preferably the meat analogue does not comprise meat protein.

The meat analogue preferably comprises less than 10 wt.% of animal protein, by weight of the meat analogue. More preferably the meat analogue comprises less than 5 wt.% of animal protein, by weight of the meat analogue. Most preferably the meat analogue does not comprise animal protein.

A second aspect of the invention relates to an uncooked meat analogue comprising, by weight of the meat analogue, the following separate components:
- at least 50 wt.% of proteinaceous fibres comprising, by weight of the proteinaceous fibres, 40-80 wt.% of water and 5-50 wt.% protein selected from dairy protein, egg protein, plant protein, fungal protein and combinations thereof;
- 0-40 wt.% of edible particulate ingredients;
- 2-20 wt.% of interstitial aqueous gelling composition;
wherein the interstitial aqueous gelling composition comprises by weight of the gelling composition:
i. 0.05-2 wt.% xanthan gum;
ii. 0.05-2 wt.% galactomannan;
iii. at least 80 wt.% water.

The embodiments described herein before in the context of the method of preparing a meat analogue, correspondingly apply to the meat analogue of the invention.

The meat analogue preferably comprises, by weight of the meat analogue, 55-95 wt.% of proteinaceous fibres, more preferably 60-80 wt.% of proteinaceous fibres.

The meat analogue preferably comprises, by weight of the meat analogue, 2-35 wt.% of edible particulate ingredients, more preferably 5-25 wt.% of edible particulate ingredients.

The meat analogue preferably comprises, by weight of the meat analogue, 3-15 wt.% of interstitial aqueous gelling composition, more preferably 5-10 wt.% of interstitial aqueous gelling composition.

The meat analogue preferably comprises, by weight of the meat analogue, at most 10 wt.% of starch components selected from starch, flour, maltodextrin and combinations thereof. More preferably, the meat analogue comprises, by weight of the meat analogue, at most 5 wt.% of starch components selected from starch, flour, maltodextrin and combinations thereof.

The meat analogue according to the invention is preferably obtained by the method as described herein before.

A third aspect of the invention relates to the use of an aqueous gelling composition for enhancing juiciness in meat analogues, wherein the aqueous gelling composition comprises by weight of the gelling composition:
i. 0.05-2 wt.% xanthan gum;
ii. 0.05-2 wt.% galactomannan;
iii. at least 80 wt.% water.

The embodiments described herein before in the context of the method of preparing a meat analogue, which relate to the aqueous gelling composition, correspondingly apply to the aqueous gelling composition that is used for enhancing juiciness in meat analogues.

The invention is further illustrated by the following non-limiting examples.

### Examples

### Example 1

Three 'Gehacktbal' (De Vegetarische Slager, the Netherlands) samples were sourced from a local supermarket. These samples comprised about 70 wt.% of proteinaceous fibres comprising water, soy protein and wheat protein.

Sample 1 received the following pre-treatment, the sample was immersed in a warm aqueous solution of 0.5 wt.% xanthan gum and 0.5 wt.% locust bean gum for 10 minutes (temperature of solution was 98±2 °C). The second sample (Sample A) was immersed in tap water of similar temperature for 10 minutes. The third sample did not receive a pre-treatment (Sample B). The fourth sample (Sample C) received the following pre-treatment, the sample was immersed in warm aqueous solution of 0.5 wt.% kappa-carrageenan and 0.5 wt.% of konjac glucomannan (Konjac Propol RS, Shimizu Chemical Group) for 10 minutes (temperature of solution was 98±2 °C).

After the pre-treatment, the samples were removed from the aqueous liquid using a skimmer and held above a pan for 20 seconds to let the excess liquid run off. Next the pre-treated samples were put on a blue kitchen paper to assess the loss of juice during cooling down to room temperature. The loss of juice was visually assessed.

After cooling down to room temperature, all samples were placed on a sheet of blue kitchen paper on a plate. Next, the samples were reheated in a microwave oven, one-by-one, for 1 minute at 600 Watt. Immediately after microwave cooking the loss of juice was determined visually by assessing the amount of water that was absorbed by the blue kitchen paper.

After the microwave heating, the samples were cut into two halves and the appearance of the cut surface was assessed. Finally, the texture of the three samples was evaluated by a panel.

The results are shown in Table 1.

| | **1** | **A** | **B** | **C** |
|---|---|---|---|---|
| Loss of juice after soaking | Low | High | n.a. | Low |
| Loss of juice during 'cooking' | High | High | Medium | High |
| Outside appearance after 'cooking' | Glossy and natural | Dull and Dry | Dull and Dry | gel layer/skin formation |
| Appearance of the inner surface of the sample directly after cutting | Juicy | Dry | Dry | Partially juicy |
| Textural characteristics in mouth | Juicy & smooth | Dry | Dry | Medium dry, unpleasant texture |

### Example 2

Three vegetarian burgers (Vivera^{™}, the Netherlands) were sourced from the local supermarket. The vegetarian burger comprised about 72 wt.% proteinaceous fibres comprising water, soy protein and wheat protein. Each sample had a weight of 100 grams.

The first burger (Burger 2) received the following pre-treatment, the sample was injected with a warm aqueous solution comprising 0.25 wt.% xanthan gum and 0.25 wt.% locust bean gum (temperature of solution was 47±2 °C). In total 10 ml of aqueous solution was injected into Burger 2, by injecting multiple discrete volumes of about 250 µl. The second burger (Burger D), received a similar treatment as Burger 2, except that only warm water was injected into the burger. The third burger did not receive a pre-treatment (Burger E).

After the pre-treatment of the Burgers 2 and C, these burgers were allowed to cool to room temperature. During and after the pre-treatment of Burger D it was observed that only a small portion of the injected water remained in the pre-treated Burger D.

The three burgers were prepared by shallow frying and the appearance of the burgers during heating was assessed. After frying the burgers were cut in half, and the cut surface of each burger was assessed. In addition, the texture of each burger was assessed by a panel.

The results are shown in Table 2.

**Table 2**

| | | **2** | **D** | **E** |
|---|---|---|---|---|
| Appearance during shallow frying | | | | |
| | - Sizzling sound | Yes | No | No |
| | - Glossy appearance | Yes | No | No |
| | - Juicy appearance | Yes | No | No |
| Appearance of the inner surface of the burger directly after cutting | | Juicy | Dry | Dry |
| Juice flows from burger after cutting | | Yes | No | No |
| Textural characteristics in mouth | | Juicy & smooth | Dry | Dry |

## Claims

1. A method of preparing a meat analogue, comprising the steps of:
a) providing proteinaceous fibres comprising, by weight of the proteinaceous fibres, 40-80 wt.% of water and 5-50 wt.% protein selected from dairy protein, egg protein, plant protein, fungal protein and combinations thereof;
b) providing an aqueous gelling composition, comprising by weight of the gelling composition:
i. 0.05-2 wt.% xanthan gum;
ii. 0.05-2 wt.% galactomannan;
iii. at least 80 wt.% water;
c) combining 100 parts by weight of the proteinaceous fibres with 2-50 parts by weight of the aqueous gelling composition,
wherein the aqueous gelling composition is capable of forming a gel at ambient temperature and ambient pressure.

2. Method according to any of the preceding claims, wherein the combination of xanthan gum and galactomannan constitutes between 0.1-1 wt.% by weight of the aqueous gelling composition.

3. Method according to any one of the preceding claims, wherein the weight ratio xanthan gum to galactomannan is between 5:95 and 95:5.

4. Method according to any one of the preceding claims, wherein the aqueous gelling composition comprises, by weight of the aqueous gelling composition, 0.4-10 wt.% of inorganic salt.

5. Method according to any one of the preceding claims, wherein the aqueous gelling composition comprises, by weight of the aqueous gelling composition, 0.2-5 wt.% of flavouring ingredients selected from glutamic acid, food-grade acidulant, combinations and salts thereof.

6. Method according to any one of the preceding claims, wherein 100 parts by weight of the proteinaceous fibres are mixed with 1-80 parts by weight of edible particulate ingredients before or during step c).

7. Method according to any one of the preceding claims, wherein the combining in step c) is performed by:
- injecting the aqueous gelling composition into a mass of proteinaceous fibres;
- infusing a mass of proteinaceous fibres with the aqueous gelling composition;
- blending the proteinaceous fibres with the aqueous gelling composition; and combinations thereof.

8. Method according to any one of the preceding claims, wherein the combination of protein and water constitutes at least 80 wt.% of the proteinaceous fibres.

9. Method according to any one of the preceding claims, wherein the proteinaceous fibres are prepared by extrusion or other shearing technologies for creating proteinaceous fibres.

10. Method according to any one of claims 1-8, wherein the proteinaceous fibres are prepared by a process comprising the steps of:
• providing an aqueous composition comprising protein selected from dairy protein, egg protein, plant protein, fungal protein and combinations thereof; and
• cross-linking the protein in the aqueous composition to produce a proteinaceous gel.

11. Method according to any one of claims 1-8, wherein the proteinaceous fibres are prepared by a process comprising the steps of:
• providing an aqueous composition comprising protein selected from dairy protein, egg protein, plant protein, fungal protein and combinations thereof, said aqueous composition further comprising a gelling agent; and
• gelling the aqueous composition by cooling the aqueous composition or by adding a gelation inducing agent.

12. Method according to any one of claims 1-8, wherein the proteinaceous fibres are prepared by a process comprising the steps of:
• providing an aqueous composition comprising protein selected from whey protein, egg protein, soy protein, wheat protein, oat protein, pea protein, chickpea protein, lupin protein, potato protein and combinations thereof; and
• gelling the aqueous composition by heating the aqueous composition.

13. An uncooked meat analogue comprising, by weight of the meat analogue, the following separate components:
- at least 50 wt.% of proteinaceous fibres comprising, by weight of the proteinaceous fibres, 40-80 wt.% of water and 5-50 wt.% protein selected from dairy protein, egg protein, plant protein, fungal protein and combinations thereof;
- 0-40 wt.% of edible particulate ingredients;
- 2-20 wt.% of interstitial aqueous gelling composition;
wherein the interstitial aqueous gelling composition comprises by weight of the gelling composition:
i. 0.05-2 wt.% xanthan gum;
ii. 0.05-2 wt.% galactomannan;
iii. at least 80 wt.% water,
- wherein the aqueous gelling composition is capable of forming a gel at ambient temperature and ambient pressure.

14. Meat analogue according to claim 13, wherein the meat analogue is obtained by the method according to any one of the claims 1-12.

15. Use of an aqueous gelling composition for enhancing juiciness in meat analogues, wherein the aqueous gelling composition comprises by weight of the gelling composition:
i. 0.05-2 wt.% xanthan gum;
ii. 0.05-2 wt.% galactomannan;
iii. at least 80 wt.% water
- wherein the aqueous gelling composition is capable of forming a gel at ambient temperature and ambient pressure.

## Patentansprüche

1. Verfahren zur Herstellung eines Fleischanalogons, umfassend die Schritte:
a) Bereitstellen von proteinhaltigen Fasern, umfassend, bezogen auf das Gewicht der proteinhaltigen Fasern, 40 - 80 Gew.-% Wasser und 5 - 50 Gew.-% Protein, ausgewählt unter Milchprotein, Eiprotein, Pflanzenprotein, Pilzprotein und Kombinationen davon;
b) Bereitstellen einer wässrigen Gelierungszusammensetzung, umfassend, bezogen auf das Gewicht der Gelierungszusammensetzung:
i. 0,05 - 2 Gew.-% Xanthangummi;
ii. 0,05 - 2 Gew.-% Galactomannan;
iii. mindestens 80 Gew.-% Wasser;
c) Kombinieren von 100 Gewichtsteilen der proteinhaltigen Fasern mit 2 - 50 Gewichtsteilen der wässrigen Gelierungszusammensetzung,
wobei die wässrige Gelierungszusammensetzung bei Umgebungstemperatur und Umgebungsdruck ein Gel bilden kann.

2. Verfahren nach vorhergehendem Anspruch, wobei die Kombination von Xanthangummi und Galactomannan 0,1 - 1 Gew.-%, bezogen auf das Gewicht der wässrigen Gelierungszusammensetzung, ausmacht.

3. Verfahren nach irgendeinem der vorhergehenden Ansprüche, wobei das Gewichtsverhältnis von Xanthangummi zu Galactomannan zwischen 5:95 und 95:5 liegt.

4. Verfahren nach irgendeinem der vorhergehenden Ansprüche, wobei die wässrige Gelierungszusammensetzung, bezogen auf das Gewicht der wässrigen Gelierungszusammensetzung, 0,4 - 10 Gew.-% anorganisches Salz umfasst.

5. Verfahren nach irgendeinem der vorhergehenden Ansprüche, wobei die wässrige Gelierungszusammensetzung, bezogen auf das Gewicht der wässrigen Gelierungszusammensetzung, 0,2 - 5 Gew.-% geschmacksgebende Zutaten, ausgewählt unter Glutaminsäure, Säuerungsmittel in Lebensmittelqualität, Kombinationen und Salzen davon, umfasst.

6. Verfahren nach irgendeinem der vorhergehenden Ansprüche, wobei vor dem oder während des Schrittes c) 100 Gewichtsteile der proteinhaltigen Fasern mit 1 - 80 Gewichtsteilen essbarer teilchenförmiger Zutaten vermischt werden.

7. Verfahren nach irgendeinem der vorhergehenden Ansprüche, wobei das Kombinieren im Schritt c) durchgeführt wird durch:
- Injizieren der wässrigen Gelierungszusammensetzung in eine Masse proteinhaltiger Fasern;
- Durchtränken einer Masse proteinhaltiger Fasern mit der wässrigen Gelierungszusammensetzung;
- Mischen der proteinhaltigen Fasern mit der wässrigen Gelierungszusammensetzung; und Kombinationen davon.

8. Verfahren nach irgendeinem der vorhergehenden Ansprüche, wobei die Kombination von Protein und Wasser mindestens 80 Gew.-% der proteinhaltigen Fasern ausmacht.

9. Verfahren nach irgendeinem der vorhergehenden Ansprüche, wobei die proteinhaltigen Fasern durch Extrusion oder andere Schertechnologien zur Erzeugung proteinhaltiger Fasern hergestellt werden.

10. Verfahren nach irgendeinem der Ansprüche 1 - 8, wobei die proteinhaltigen Fasern durch ein Verfahren hergestellt werden, das die Schritte umfasst:
• Bereitstellen einer wässrigen Zusammensetzung, umfassend Protein, ausgewählt unter Milchprotein, Eiprotein, Pflanzenprotein, Pilzprotein und Kombinationen davon; und
• Vernetzen des Proteins in der wässrigen Zusammensetzung, um ein proteinhaltiges Gel zu erzeugen.

11. Verfahren nach irgendeinem der Ansprüche 1 - 8, wobei die proteinhaltigen Fasern durch ein Verfahren hergestellt werden, umfassend die Schritte:
• Bereitstellen einer wässrigen Zusammensetzung, umfassend Protein, ausgewählt unter Milchprotein, Eiprotein, Pflanzenprotein, Pilzprotein und Kombinationen davon, wobei die wässrige Zusammensetzung ferner ein Gelierungsmittel enthält; und
• Gelieren der wässrigen Zusammensetzung durch Kühlen der wässrigen Zusammensetzung oder durch Zugabe eines Gelbildung auslösenden Mittels.

12. Verfahren nach irgendeinem der Ansprüche 1 - 8, wobei die proteinhaltigen Fasern durch ein Verfahren hergestellt werden, umfassend die Schritte:
• Bereitstellen einer wässrigen Zusammensetzung, umfassend Protein, ausgewählt unter Molkeprotein, Eiprotein, Sojaprotein, Weizenprotein, Haferprotein, Erbsenprotein, Kichererbsenprotein, Lupinenprotein, Kartoffelprotein und Kombinationen davon; und
• Gelieren der wässrigen Zusammensetzung durch Erhitzen der wässrigen Zusammensetzung.

13. Ungekochtes Fleischanalogon, umfassend, bezogen auf das Gewicht des Fleischanalogons, die folgenden einzelnen Bestandteile:
- mindestens 50 Gew.-% proteinhaltige Fasern, umfassend, bezogen auf das Gewicht der proteinhaltigen Fasern, 40 - 80 Gew.-% Wasser und 5 - 50 Gew.-% Protein, ausgewählt unter Milchprotein, Eiprotein, Pflanzenprotein, Pilzprotein und Kombinationen davon;
- 0 - 40 Gew.-% essbare teilchenförmige Zutaten;
- 2 - 20 Gew.-% interstitielle wässrige Gelierungszusammensetzung;
wobei die interstitielle wässrige Gelierungszusammensetzung, bezogen auf das Gewicht der Gelierungszusammensetzung, umfasst:
i. 0,05 - 2 Gew.-% Xanthangummi;
ii. 0,05 - 2 Gew.-% Galactomannan;
iii. mindestens 80 Gew.-% Wasser;
- wobei die wässrige Gelierungszusammensetzung bei Umgebungstemperatur und Umgebungsdruck ein Gel bilden kann.

14. Fleischanalogon nach Anspruch 13, wobei das Fleischanalogon durch das Verfahren nach einem der Ansprüche 1 - 12 erhalten wird.

15. Verwendung einer wässrigen Gelierungszusammensetzung zur Verbesserung der Saftigkeit von Fleischanaloga, wobei die wässrige Gelierungszusammensetzung, bezogen auf das Gewicht der Gelierungszusammensetzung, umfasst:
i. 0,05 - 2 Gew.-% Xanthangummi;
ii. 0,05 - 2 Gew.-% Galactomannan;
iii. mindestens 80 Gew.-% Wasser,
- wobei die wässrige Gelierungszusammensetzung bei Umgebungstemperatur und Umgebungsdruck ein Gel bilden kann.

## Revendications

1. Procédé de préparation d'un analogue de viande, comprenant les étapes de :
a) fourniture de fibres protéiques comprenant, en poids des fibres protéiques, 40 à 80 % en poids d'eau et 5 à 50 % en poids de protéine choisie parmi une protéine laitière, une protéine d'œuf, une protéine végétale, une protéine fongique et des combinaisons de celles-ci ;
b) fourniture d'une composition gélifiante aqueuse, comprenant en poids de la composition gélifiante :
i. 0,05 à 2 % en poids de gomme xanthane ;
ii. 0,05 à 2 % en poids de galactomannane ;
iii. au moins 80 % en poids d'eau ;
c) combinaison de 100 parties en poids des fibres protéiques avec 2 à 50 parties en poids de la composition gélifiante aqueuse,
dans lequel la composition gélifiante aqueuse est apte à former un gel à température ambiante et pression ambiante.

2. Procédé selon l'une quelconque des revendications précédentes, dans lequel la combinaison de gomme xanthane et de galactomannane constitue entre 0,1 à 1 % en poids en poids de la composition gélifiante aqueuse.

3. Procédé selon l'une quelconque des revendications précédentes, dans lequel le rapport en poids de la gomme xanthane au galactomannane est entre 5:95 et 95:5.

4. Procédé selon l'une quelconque des revendications précédentes, dans lequel la composition gélifiante aqueuse comprend, en poids de la composition gélifiante aqueuse, 0,4 à 10 % en poids de sel inorganique.

5. Procédé selon l'une quelconque des revendications précédentes, dans lequel la composition gélifiante aqueuse comprend, en poids de la composition gélifiante aqueuse, 0,2 à 5 % en poids d'ingrédients aromatisants choisis parmi l'acide glutamique, un acidulant de qualité alimentaire, des combinaisons et des sels de ceux-ci.

6. Procédé selon l'une quelconque des revendications précédentes, dans lequel 100 parties en poids des fibres protéiques sont mélangées avec 1 à 80 parties en poids d'ingrédients particulaires comestibles avant ou pendant l'étape c).

7. Procédé selon l'une quelconque des revendications précédentes, dans lequel la combinaison dans l'étape c) est effectuée par :
- injection de la composition gélifiante aqueuse dans une masse de fibres protéiques ;
- infusion d'une masse de fibres protéiques avec la composition gélifiante aqueuse ;
- mélange des fibres protéiques avec la composition gélifiante aqueuse ; et des combinaisons de ceux-ci.

8. Procédé selon l'une quelconque des revendications précédentes, dans lequel la combinaison de protéine et d'eau constitue au moins 80 % en poids des fibres protéiques.

9. Procédé selon l'une quelconque des revendications précédentes, dans lequel les fibres protéiques sont préparées par extrusion ou autres technologies de cisaillement pour créer des fibres protéiques.

10. Procédé selon l'une quelconque des revendications 1 à 8, dans lequel les fibres protéiques sont préparées par un procédé comprenant les étapes de :
• fourniture d'une composition aqueuse comprenant une protéine choisie parmi une protéine laitière, une protéine d'œuf, une protéine végétale, une protéine fongique et des combinaisons de celles-ci ; et
• réticulation de la protéine dans la composition aqueuse pour produire un gel protéique.

11. Procédé selon l'une quelconque des revendications 1 à 8, dans lequel les fibres protéiques sont préparées par un procédé comprenant les étapes de :
• fourniture d'une composition aqueuse comprenant une protéine choisie parmi une protéine laitière, une protéine d'œuf, une protéine végétale, une protéine fongique et des combinaisons de celles-ci, ladite composition aqueuse comprenant en outre un agent gélifiant ; et
• gélification de la composition aqueuse par refroidissement de la composition aqueuse ou par ajout d'un agent inducteur de gélification.

12. Procédé selon l'une quelconque des revendications 1 à 8, dans lequel les fibres protéiques sont préparées par un procédé comprenant les étapes de :
• fourniture d'une composition aqueuse comprenant une protéine choisie parmi une protéine de lactosérum, une protéine d'œuf, une protéine de soja, une protéine de blé, une protéine d'avoine, une protéine de pois, une protéine de pois chiche, une protéine de lupin, une protéine de pomme de terre et des combinaisons de celles-ci ; et
• gélification de la composition aqueuse par chauffage de la composition aqueuse.

13. Analogue de viande non cuit comprenant, en poids de l'analogue de viande, les composants séparés suivants :
- au moins 50 % en poids de fibres protéiques comprenant, en poids des fibres protéiques, 40 à 80 % en poids d'eau et 5 à 50 % en poids de protéine choisie parmi une protéine laitière, une protéine d'œuf, une protéine végétale, une protéine fongique et des combinaisons de celles-ci ;
- 0 à 40 % en poids d'ingrédients particulaires comestibles ;
- 2 à 20 % en poids de composition gélifiante aqueuse interstitielle ;
dans lequel la composition gélifiante aqueuse interstitielle comprend en poids de la composition gélifiante :
i. 0,05 à 2 % en poids de gomme xanthane ;
ii. 0,05 à 2 % en poids de galactomannane ;
iii. au moins 80 % en poids d'eau,
- dans lequel la composition gélifiante aqueuse est apte à former un gel à température ambiante et pression ambiante.

14. Analogue de viande selon la revendication 13, dans lequel l'analogue de viande est obtenu par le procédé selon l'une quelconque des revendications 1 à 12.

15. Utilisation d'une composition gélifiante aqueuse pour accroître la jutosité dans des analogues de viande, dans laquelle la composition gélifiante aqueuse comprend en poids de la composition gélifiante :
i. 0,05 à 2 % en poids de gomme xanthane ;
ii. 0,05 à 2 % en poids de galactomannane ;
iii. au moins 80 % en poids d'eau
- dans laquelle la composition gélifiante aqueuse est apte à former un gel à température ambiante et pression ambiante.
